# EUROPÄISCHE PATENTSCHRIFT

(11) **EP 3 468 909 B1**
(45) Veröffentlichungstag und Bekanntmachung des Hinweises auf die Patenterteilung: **24.07.2024**
(21) Anmeldenummer: 17729127.5
(22) Anmeldetag: 12.06.2017
(51) Int. Cl.: B67C 3/00, B67C 3/28, G01F 23/292

(54) **VORRICHTUNG UND VERFAHREN ZUM BEFÜLLEN VON BEHÄLTERN MIT EINEM FÜLLPRODUKT**
APPARATUS AND METHOD FOR FILLING CONTAINERS WITH A FILLING PRODUCT
DISPOSITIF ET PROCEDE DE REMPLISSAGE D'UN RÉCIPIENT AVEC UN PRODUIT DE REMPLISSAGE

(30) Priorität: 10.06.2016 DE 102016110721
(43) Veröffentlichungstag der Anmeldung: 17.04.2019
(73) Patentinhaber: Krones AG, 93073 Neutraubling (DE)
(72) Erfinder: KNIELING, Erwin, 93073 Neutraubling (DE)
(74) Vertreter: Nordmeyer, Philipp Werner
(86) Internationale Anmeldenummer: PCT/EP2017/064252
(87) Internationale Veröffentlichungsnummer: WO 2017/212065

(56) Entgegenhaltungen:
- DE-A1- 102014 216 576
- DE-A1- 4 446 548
- JP-A- 2006 240 658

## Beschreibung

### Technisches Gebiet

Die vorliegende Erfindung betrifft eine Vorrichtung und ein Verfahren zum Befüllen von Behältern mit einem Füllprodukt, bevorzugt zum Befüllen von Flaschen in einer Getränkeabfüllanlage.

### Stand der Technik

In Getränkeabfüllanlagen ist es bekannt, zu befüllende Behälter in einem Füller, beispielweise in einem Füller in Rundläufer-Bauweise, mit einem Füllprodukt zu befüllen. Dabei wird der Strom des Füllprodukts in den zu befüllenden Behälter über ein Füllventil gesteuert. Um das Starten und Beenden des Füllproduktstroms zu steuern oder zu regeln und um einen gewünschten End-Füllstand in dem zu befüllenden Behälter zu erreichen, sind verschiedene Arten der Ermittlung des Füllendes bekannt.

Es ist beispielsweise bekannt, die in den Behälter eingefüllte Masse des Füllprodukts mittels einer Wägezelle zu ermitteln und beim Erreichen einer vorgegebenen Masse das Füllventil zu schließen und auf diese Weise das Füllende einzuleiten. Nach dem Schließen des Füllventils findet üblicher Weise noch ein Nachlauf des Füllprodukts aus den unterhalb des eigentlichen Ventils liegenden, vom Füllprodukt durchspülten Bereiche des Füllorgans statt. Dieser Nachlauf muss beim Bestimmen des Füllendes mit berücksichtigt werden. Das Füllende kann beispielsweise auch mittels eines Durchflussmessers ermittelt werden.

Wägezellen bedingen jedoch eine aufwendige Konstruktion des Füllers und Durchflussmesser sind auf das Abfüllen leitfähiger Produkte beschränkt. Bei der Abfüllung von Füllprodukten mit uneinheitlicher Dichte, wie beispielsweise Säften mit Pulpenanteil oder Behältern mit zwischen unterschiedlichen Behältern variierendem Volumen, beispielsweise Glasflaschen, können die obengenannten Arten der Abfüllung zu mehr oder minder stark ausgeprägten Abweichungen im Füllstand des Füllprodukts in den einzelnen Behältern führen.

Um einen vorgegebenen Füllstand zu erhalten und damit ein einheitliches Erscheinungsbild der befüllten Behälter zu erreichen, ist ferner bekannt, den Füllstand mit einem in den Behälter eintauchenden Rückgasrohr oder einer Füllstandssonde zu ermitteln. Bei diesen Vorrichtungen stehen die Sonde beziehungsweise das Rückgasrohr mit dem Füllprodukt in Kontakt, was einen erhöhten Reinigungsaufwand bedingt. Ferner sind dadurch, dass das Füllrohr beziehungsweise die Sonde in den Behälter eintaucht, hohe Hübe der Behälter am Füller von einer Übernahmeposition zu einer Abfüllposition notwendig, was eine aufwändige mechanische Konstruktion bedingt.

Um die obenstehenden Nachteile zu überwinden, sind Vorrichtungen und Verfahren zum Befüllen bekannt, bei welchen der Füllstand optisch erfasst wird. So ist aus der DE 102011 075 459 A1 zu entnehmen, zusätzlich zu einem füllproduktberührenden Messsensor eine stationäre Kamera vorzusehen, welche den Füllstand des Füllprodukts zusätzlich überwacht.

Die DE 43 06 120 C1 zeigt einen Rundläuferfüller, bei welchem im Bereich des Füllstopps eine stationäre Videokamera zum gleichzeitigen Messen des Füllpegels von mehreren durch das Sichtfeld der Videokamera transportierten Behältern vorgesehen ist.

Die JP 2006-240658 A beschreibt eine Füllvorrichtung mit einem Transportkarussell und daran angebrachten Füllvolumensensoren.

### Darstellung der Erfindung

Ausgehend von dem bekannten Stand der Technik ist es eine Aufgabe der vorliegenden Erfindung, eine verbesserte Vorrichtung zum Befüllen von Behältern mit einem Füllprodukt, bevorzugt zum Befüllen von Flaschen in einer Getränkeabfüllanlage, sowie ein entsprechendes Verfahren bereitzustellen.

Die Aufgabe wird durch eine Vorrichtung zum Befüllen von Behältern mit einem Füllprodukt, bevorzugt zum Befüllen von Flaschen in einer Getränkeabfüllanlage mit den Merkmalen des Anspruchs 1 gelöst. Die Aufgabe wird ebenfalls durch ein Verfahren mit den Merkmalen des Anspruchs 10 gelöst.

Vorteilhafte Weiterbildungen ergeben sich aus den Unteransprüchen sowie der vorliegenden Beschreibung und den Figuren.

Entsprechend wird eine Vorrichtung zum Befüllen eines Behälters mit einem Füllprodukt in einer Getränkeabfüllanlage vorgeschlagen, wobei eine Transportvorrichtung zum Transportieren eines zu befüllenden Behälters während des Befüllvorgangs vorgesehen ist, wobei die Transportvorrichtung den zu befüllenden Behälter entlang einer Transportbahn transportiert, und wobei mindestens eine Bestimmungseinheit zum Bestimmen des Füllstands des Füllprodukts in dem Behälter vorgesehen ist. Erfindungsgemäß ist mindestens eine Bestimmungseinheit in einem Teilabschnitt der Transportbahn des Behälters mit der Transportvorrichtung synchron bewegbar.

Dadurch, dass mindestens eine optische Bestimmungseinheit in einem Teilabschnitt der Transportbahn des Behälters mit der Transporteinheit synchron bewegbar ist, kann die mindestens eine Bestimmungseinheit einen durch die Transportvorrichtung bewegten, zu befüllenden Behälter während seines Transports in dem Teilabschnitt der Transportbahn, in welcher die Transportvorrichtung den Behälter transportieren kann, bezüglich der Füllhöhe überwachen. Insbesondere kann die Bestimmungseinheit den Ist-Füllstand des abzufüllenden Füllprodukts in dem Behälter erfassen. Hierdurch kann der Füllstand des Füllprodukts berührungslos erfasst werden, was unter anderem zu einer mikrobiologischen Verbesserung führt, da der Befüllvorgang ohne eine Berührung des Produkts durch einen füllproduktberührten Füllstandsmesser erfolgt. Somit ist ein Eintauchen eines Füllrohres oder einer Füllstandssonde nicht notwendig.

Weiterhin kann die Zuführung einer Abfüllvorrichtung an den zu befüllenden Behälter beziehungsweise die Zuführung des zu befüllenden Behälters an die Abfüllvorrichtung mit einem geringeren relativen Hub zwischen Behälter und Füllorgan erfolgen. Durch den geringeren Hub kann ein im Vergleich zum Stand der Technik vergrößerter Abfüllbereich, bei einem Rundläufer-Füller ein vergrößerter Abfüllwinkel, bei gleichen Abmessungen der Vorrichtung zum Befüllen von Behältern mit einem Füllprodukt bereitgestellt werden, oder die Vorrichtung bei gleicher Leistung kleiner ausgeführt werden. Dies führt zu einer Kostenreduzierung in der Produktion und einer erhöhten Effizienz im Vergleich zu aus dem Stand der Technik bekannten Vorrichtungen.

Ferner ist hierdurch die Komplexität die Vorrichtung reduziert, da das Einleiten des Füllendes unter Berücksichtigung der Nachlaufmenge des Füllprodukts über die Bestimmungseinheit erfolgen kann. Daher kann auf zusätzliche Einrichtungen, welche andernfalls zur Erfassung des Füllstands beziehungsweise des Füllproduktvolumens notwendig wären, wie eine Volumenstrommesseinrichtung, eine Vordosierungseinrichtung oder eine Gewichtsmessung an der Behälteraufnahme der Transportvorrichtung, verzichtet werden. Ferner kann aufgrund des Fehlens eines Füllstandrohres zum Erfassen des Füllstands das Vorsehen einer CIP-Kappe zur Reinigung und Sterilisierung des Füllorgans konstruktiv einfacher umgesetzt werden.

Zudem ist es durch das synchrone Bewegen der mindestens einen Bestimmungseinheit in dem Teilabschnitt der Transportbahn möglich, nach dem Einleiten der Beendigung des Befüllvorgangs durch die Bestimmungseinheit den Nachlauf des Füllprodukts zu erfassen und zu kontrollieren, ob der End-Füllstand des Füllprodukts in dem befüllten Behälter mit einem Vorgabewert des End-Füllstands übereinstimmt beziehungsweise innerhalb eines vorgegebenen Toleranzbereichs für eine Abweichung vom Vorgabewert liegt.

Da die mindestens eine Bestimmungseinheit aufgrund ihrer synchronen Bewegung mit der Transporteinheit ebenfalls synchron mit dem zu Behälter mitbewegt wird, kann der Behälter über den gesamten Teilabschnitt stets im Zentrum des Erfassungsbereichs der Bestimmungseinheit gehalten werden. Ist die Bestimmungseinheit bevorzugt als optische Bestimmungseinheit ausgeführt, kann sie somit einen kleinen Bildwinkel aufweisen und/oder mit einem sehr geringen Abstand zu dem Behälter bewegt werden, als dies aus dem Stand der Technik bekannt war. Hierdurch kann der Behälter und insbesondere der Füllstand des Füllprodukts in dem Behälter sehr genau und hochauflösend erfasst werden, so dass das Füllergebnis weiter verbessert wird.

Bevorzugt wird die mindestens eine Bestimmungseinheit mit einem konstanten Abstand zur Transportvorrichtung bewegt. Hierdurch kann der Abstand zwischen einem durch die Transportvorrichtung bewegten Behälter und der den Füllstand des Füllprodukts in dem Behälter erfassenden optischen Bestimmungseinheit über die gesamte Länge des Teilabschnitts, in welchem der Füllstand erfasst werden soll, konstant gehalten werden. Entsprechend ist keine Kompensation von Abstandsänderungen beim Erfassen des Füllstands durch die Bestimmungseinheit vorzusehen.

In einer bevorzugten Ausführungsform ist die mindestens eine Bestimmungseinheit in dem Teilabschnitt der Transportbahn einem Behälter zugeordnet und erfasst einzig den Füllstand des Füllprodukts in dem ihr zugeordneten Behälter. Hierdurch kann die Bestimmungseinheit mit besonders geringem Abstand zu dem zugeordneten Behälter mit diesem synchron bewegt werden. Die Erfassung des Füllstands kann dadurch besonders genau, präzise und hochauflösend erfolgen.

Alternativ kann eine Bestimmungseinheit zum Erfassen des Füllstands von mehr als einem Behälter vorgesehen sein. Dadurch kann der konstruktive Aufwand der Vorrichtung verringert werden und gleichzeitig der Füllstand gegenüber bekannten Vorrichtungen zum Befüllen von Behältern mit einem Füllprodukt mit einer erhöhten Genauigkeit erfasst werden.

Weiterhin kann es vorteilhaft sein, wenn eine Mehrzahl vonBestimmungseinheiten vorgesehen ist, welche in dem Teilabschnitt der Transportbahn des Behälters mit der Transporteinheit synchron bewegbar sind. Hierdurch kann der Füllstand von mehreren durch die Transporteinheit transportierten Behältern gleichzeitig erfasst werden und die Effizienz der Vorrichtung sowie einer die Vorrichtung aufweisenden Abfüllanlage erhöht werden.

In einer weiter bevorzugten Ausführungsform ist die mindestens eine Bestimmungseinheit eine optische Bestimmungseinheit zur optischen Bestimmung des Füllstands. Dadurch kann der Füllstand präzise erfasst respektive bestimmt werden, ohne dass eine Berührung der Bestimmungseinheit mit dem Füllprodukt und/oder dem Behälter notwendig ist. Ferner weist die Vorrichtung, wenn die Bestimmungsvorrichtung als optische Bestimmungsvorrichtung bereitgestellt ist, einen besonders einfachen Aufbau auf, da auf eine komplizierte Mechanik mit beweglichen Teilen, beispielsweise zum Einführen einer Sonde in den Behälter oder Realisieren einer Wägezelle, verzichtet werden.

Um den Füllstand des Füllprodukts in dem Behälter besonders präzise und einfach zu erfassen, ist mindestens eine optische Bestimmungseinheit in einer bevorzugten Ausführungsform eine Kamera, wobei die mit der Kamera aufgenommenen Bilder mit einer entsprechenden Auswertungsvorrichtung ausgewertet werden können.

Damit können die Bedingungen zum Beenden des Füllvorgangs ausgewertet werden - beispielsweise das Erreichen einer vorbestimmten Füllhöhe oder das Erreichen einer vorbestimmten Geschwindigkeit des Ansteigens des Füllproduktspiegels oder eine Kombination hieraus.

In einer weiter bevorzugten Ausbildung der Erfindung ist eine Führungsvorrichtung zum Bewegen mindestens einer Bestimmungseinheit außerhalb des zu befüllenden Behälters vorgesehen. Durch das Vorsehen der Führungsvorrichtung kann die Bewegung der Bestimmungseinheit von der Bewegung der Transportvorrichtung entkoppelt werden. Bevorzugt ist die Führungsvorrichtung in dem Teilabschnitt der Transportbahn angeordnet. Die Bewegung der Bestimmungseinheit kann dadurch im Wesentlichen auf den Teilabschnitt beschränkt werden. Insbesondere bei einem Befüllen mehrerer Behälter, bei welchem sich das Befüllen der Behälter zeitlich überschneidet, kann hierdurch die Anzahl an für die gleichzeitige Erfassung des Füllstands der befüllt werdenden Behälter erforderlichen Bestimmungseinheiten reduziert werden.

Um eine besonders kompakte erfindungsgemäße Vorrichtung zum Befüllen von Behältern mit einem Füllprodukt bereitstellen zu können, kann die Bestimmungseinheit an der Transportvorrichtung angeordnet sein.

In einer weiter bevorzugten Ausführungsform ist die Führungsvorrichtung von der Transportvorrichtung beabstandet angeordnet. Hierdurch kann die Bewegung der mindestens einen Bestimmungseinheit von der Bewegung der Transportvorrichtung komplett entkoppelt erfolgen. Die mindestens eine Bestimmungseinheit kann somit lediglich in einem Bereich bewegt werden, in welchem sie zum Erfassen des Füllstands benötigt wird. Insbesondere bei großen Transportvorrichtungen, bei welchen eine Vielzahl an Behältern transportiert und befüllt wird, kann das Erfassen des Füllstands in dem Teilabschnitt der Transportbahn durch eine geringe Zahl an Bestimmungseinheiten erfolgen.

Die Führungsvorrichtung ist dabei im Wesentlichen lediglich in dem Teilabschnitt der Transportbahn vorzusehen. Eine an das in Transportrichtung der Transportvorrichtung gesehene Ende des Teilabschnitts bewegte, den Füllstand eines ersten Behälters bestimmende Bestimmungseinheit kann durch die Führungsvorrichtung zurück an den in Transportrichtung der Transportvorrichtung gesehenen Anfang des Teilabschnitts bewegt werden und dort die Bestimmung des Füllstands eines weiteren Behälters übernehmen. Entsprechend ist für das Bestimmen des Füllstands einer Vielzahl von Behältern lediglich eine geringe Zahl an Bestimmungseinheiten notwendig. Die Vorrichtung zum Befüllen von Behältern kann demgemäß mit einem geringen Bauaufwand und einer geringen Komplexität hergestellt werden.

In einer weiter bevorzugten Ausgestaltung ist die Führungsvorrichtung zumindest entlang eines Teilsektors des Abfüllsegments, in welchem der zu befüllende Behälter mit dem Füllprodukt befüllt wird, angeordnet. Bevorzugt umfasst der Teilsektor dabei zumindest einen Endsektor des Abfüllsegments. Hierdurch wird der Füllstand des Füllprodukts in dem befüllt werdenden Behälter bis zum Erreichen des vorgegebenen Füllstands erfasst. Wenn der Teilsektor den Endsektor des Abfüllsegments umfasst, kann die Endphase des Befüllens überwacht und die Beendigung des Befüllvorgangs durch die Erfassung des Füllstands mittels der Bestimmungseinheit ausgelöst werden. Auch kann der End-Füllstand in dem Behälter, welcher sich durch das Nachfließen des Nachlaufs des Füllprodukts ergibt, durch die den Füllstand des dann befüllten Behälters erfassende Bestimmungseinheit kontrolliert werden. Fehlerhaft befüllte Behälter können so erkannt und gegebenenfalls nachgefüllt oder ausgeschleust werden.

Zusätzlich kann mindestens eine Bestimmungseinheit mit einer Steuereinheit zum Steuern und/oder Regeln des Befüllvorgangs des Behälters in Kommunikation stehen, wobei das Beenden des Befüllvorgangs durch die Erfassung eines vorgegebenen Füllstands und/oder der Entwicklung des Füllstands im Behälter mittels der Bestimmungseinheit ermittelbar ist. Die Bestimmungseinheit signalisiert dabei der Steuereinheit das Erreichen des vorgegebenen Füllstands in dem Behälter. Daraufhin gibt die Steuereinheit einen Steuerbefehl zum Beenden des Füllvorgangs ab, so dass eine für das Befüllen des Behälters vorgesehene Befüllvorrichtung verschlossen wird. Der vorgegebene Füllstand ist dabei so gewählt, dass ein nach dem Schließen der Befüllvorrichtung aus dieser in den Behälter laufender Nachlauf des Füllprodukts berücksichtigt wird, so dass sich ein vorgegebener End-Füllstand des Füllprodukts in dem Behälter einstellt. Ferner kann die Bestimmungseinheit zusätzlich den End-Füllstand erfassen und an die Steuereinheit übermitteln.

Basierend darauf kann die Steuereinheit bei einer Abweichung des End-Füllstands von dem vorgegebenen Sollwert des End-Füllstands beziehungsweise von einem vorgegebenen Toleranzbereich, in dessen Grenzen der End-Füllstand von dem Sollwert abweichen kann, einen weiteren Steuerbefehl zum Nachfüllen oder Ausschleusen des fehlerhaft befüllten Behälters an eine entsprechende Einrichtung ausgeben.

Gemäß der Erfindung ist die mindestens eine Bestimmungseinheit auf einer vorgegebenen, geschlossenen Bewegungsbahn geführt. Dadurch, dass die mindestens eine Bestimmungseinheit auf einer vorgegebenen Bewegungsbahn geführt ist, ist sichergestellt, dass sich die Bestimmungseinheit stets in einer für die Erfassung des Füllstands korrekten Position befindet, so dass Fehlmessungen vermieden werden können. Durch das Vorsehen einer geschlossenen Bewegungsbahn kann die mindestens eine Bestimmungseinheit ohne Umkehrung ihrer Bewegung, folglich mit einem gleichbleibenden Bewegungssinn, entlang der Bewegungsbahn bewegt werden.

Bevorzugt erfolgt die Bewegung der mindestens einen Bestimmungseinheit entlang der Bewegungsbahn translatorisch und/oder rotatorisch und und/oder in einer prismaförmig und/oder nierenförmig ausgebildeten Bewegungsbahn. Hierdurch kann die Bewegungsbahn in Bezug auf den zu erfassenden Behälter genau eingestellt werden. Insbesondere kann hierdurch der Abstand zwischen der Bestimmungseinheit und dem zu erfassenden Behälter genau eingestellt werden.

In einer bevorzugten Ausgestaltung ist die Bewegungsbahn durch die Führungsvorrichtung vorgegeben. Dadurch ist sichergestellt, dass die Bewegung der mindestens einen Bestimmungseinheit unabhängig von der Transportvorrichtung oder anderen Komponenten der Vorrichtung zum Befüllen von Behältern justierbar und ausrichtbar ist. Es kann somit eine genaue Ausrichtung der Bestimmungseinheit in Bezug auf die Transportbahn der transportierten Behälter ermöglicht werden.

Gemäß der Erfindung weist die Bewegungsbahn zumindest einen Arbeitsbereich auf, in welchem die mindestens eine Bestimmungseinheit synchron zum Behälter bewegbar ist, um den Füllstand in dem Behälter zu erfassen, und weist einen Rückführungsbereich auf, in welchem die Bestimmungseinheit zum Anfang des Arbeitsbereichs bewegbar ist. Insbesondere, wenn mehr als eine Bestimmungseinheit vorgesehen ist, können diese entlang der Bewegungsbahn mit einem gleichbleibenden Bewegungssinn bewegt werden. So kann, während mindestens eine Bestimmungseinheit im Arbeitsbereich bewegt wird, mindestens eine weitere Bestimmungseinheit vom Ende des Arbeitsbereichs über den Rückführungsbereichs zum Anfang des Arbeitsbereichs geführt werden. Dadurch ist es möglich, auch bei der Befüllung mehrerer Behälter gleichzeitig deren Füllstand mit einer geringen Anzahl an Bestimmungseinheiten zu erfassen. Bevorzugt verfolgt dabei jeweils eine Bestimmungseinheit den Füllstand jeweils eines Behälters während dessen Befüllvorgangs.

Gemäß der Erfindung ist mindestens eine Bestimmungseinheit in dem Rückführungsbereich mit einer anderen Geschwindigkeit führbar und/oder erfährt eine andere Beschleunigung, als im Arbeitsbereich. Hierdurch kann die Anzahl an Bestimmungseinheiten an der Führungsvorrichtung reduziert werden. Durch die erhöhte Geschwindigkeit der mindestens einen Bestimmungseinheit in dem Rückführungsbereich kann diese schneller an den Anfang des Arbeitsbereichs bewegt werden, als eine Bestimmungseinheit zum Durchqueren des Arbeitsbereichs benötigt.

In einer bevorzugten Ausführungsform weist die Führungsvorrichtung eine Linearführung und/oder einen Förderriemen und/oder eine magnetische Schwebeführung und/oder einen Langstator auf. Hierdurch kann eine genaue Führung der mindestens einen Bestimmungseinheit bereitgestellt werden. Durch die Linearführung erfährt die Bestimmungseinheit eine definierte Bewegung. Die Position der Bestimmungseinheit kann somit zu jedem Punkt ihrer Bewegung, bevorzugt ihrer Bewegungsbahn, genau zu dem zu erfassenden Behälter ausgerichtet werden, so dass eine besonders genaue Erfassung des Füllstands des Füllprodukts durch die Bestimmungseinheit ermöglicht ist. Die Bestimmungseinheit kann ferner leichtgängig und im Wesentlichen spielfrei mit einer hohen Laufgenauigkeit bewegt werden, wodurch eine hohe Präzision der Erfassung des Füllstands über einen langen Zeitraum ermöglicht ist. Folglich ist der Wartungsaufwand der Vorrichtung gering. Durch das Vorsehen eines Riemens kann die Bestimmungseinheit mit einem geringen konstruktiven sowie energetischen Aufwand bewegt werden. Hierbei ist es möglich, einen die mindestens eine Bestimmungseinheit tragenden Schlitten durch einen Riemen anzutreiben.

Alternativ kann die Bestimmungseinheit auch direkt an dem Riemen angeordnet sein, so dass dieser sowohl antreibende als auch führende Funktion hat. Ebenso kann die Bewegung der Bestimmungseinheit über eine Verzahnung bereitgestellt sein, wobei ein an einem mindestens eine Bestimmungseinheit aufweisenden, geführten Schlitten angeordnetes Ritzel mit einer Verzahnung der Führung kämmt. Bevorzugt ist das Ritzel dabei mittels eines auf dem Schlitten angeordneten Antriebs ansteuerbar.

In einer weiteren bevorzugten alternativen Ausgestaltung wird die Bestimmungseinheit mittels einer magnetischen Schwebeführung und insbesondere einem Linearstatorantrieb angetrieben. Bevorzugt ist ein die Bestimmungseinheit aufweisender Schlitten der Schwebeführung passiv angetrieben, wobei die Führungsschiene als Langstator ausgebildet ist. Dadurch können unterschiedliche Geschwindigkeiten der Bestimmungseinheit präzise und energieeffizient eingestellt werden.

In einer weiter bevorzugten Ausführungsform ist mindestens ein mit der Transportvorrichtung bewegtes Füllventil zum Befüllen eines Behälters vorgesehen, wobei das Füllventil aufgrund eines Steuerbefehls verschließbar ist, wobei der Steuerbefehl durch die Erfassung des vorgegebenen Füllstands im Behälter mittels der mindestens einen Bestimmungseinheit auslösbar ist. Dadurch kann ein besonders präzises Befüllen des Behälters mit dem Füllprodukt erreicht werden. Das Füllvolumen des Füllprodukts kann aufgrund des Füllventils hierbei besonders genau eingestellt werden. Fernerhin ist eine sichere Reproduzierbarkeit der Füllvolumenabgabe bereitgestellt.

Die oben gestellte Aufgabe wird weiterhin durch ein Verfahren zum Befüllen von Behältern mit einem Füllprodukt, bevorzugt zum Befüllen von Flaschen in einer Getränkeabfüllanlage mit den Merkmalen des Anspruchs 10 gelöst. Vorteilhafte Weiterbildungen des Verfahrens ergeben sich aus den Unteransprüchen sowie der vorliegenden Beschreibung und den Figuren.

Entsprechend wird ein Verfahren zum Befüllen von Behältern mit einem Füllprodukt, bevorzugt zum Befüllen von Flaschen in einer Getränkeabfüllanlage, umfassend die Schritte des Transportierens eines zu befüllenden Behälters mit einer Transportvorrichtung und des Befüllens des mittels der Transportvorrichtung bewegten Behälters während des Transports vorgeschlagen. Erfindungsgemäß wird mindestens eine Bestimmungseinheit mit dem mittels der Transportvorrichtung bewegten Behälter in einem Teilabschnitt der Transportbahn synchron bewegt, wobei die synchron zu dem Behälter bewegte Bestimmungseinheit den Füllstand des Füllprodukts in dem Behälter erfasst. Die mindestens eine Bestimmungseinheit wird auf einer vorgegebenen, geschlossenen Bewegungsbahn geführt, wobei die Bewegungsbahn zumindest einen Arbeitsbereich, in welchem die mindestens eine Bestimmungseinheit synchron zum Behälter bewegt wird, um den Füllstand in dem Behälter zu erfassen, und einen Rückführungsbereich aufweist, in welchem die Bestimmungseinheit zum Anfang des Arbeitsbereichs bewegt wird, wobei mindestens eine Bestimmungseinheit in dem Rückführungsbereich mit einer anderen Geschwindigkeit geführt wird und/oder eine andere Beschleunigung erfährt, als im Arbeitsbereich. Hierdurch werden die oben genannten Vorteile erreicht.

In einer bevorzugten Ausgestaltung wird der Befüllvorgang des Behälters beendet, wenn die Bestimmungseinheit einen vorgegebenen Füllstand im Behälter erfasst.

Weiterhin vorteilhaft kann es sein, wenn mindestens eine Bestimmungseinheit über einen Teilsektor des Abfüllsegments, in welchem der zu befüllende Behälter mit dem Füllprodukt befüllt wird, bewegt wird, bevorzugt zumindest über einen Endsektor des Abfüllsegments.

Besonders vorteilhaft kann es sein, wenn in einer bevorzugten Weiterbildung die Bestimmungseinheit eine optische Bestimmungseinheit ist, bevorzugt eine Kamera, wobei der Füllstand durch die optische Bestimmungseinheit optisch erfasst wird.

In einer weiter bevorzugten Ausführung wird mindestens eine Bestimmungseinheit durch eine Führungsvorrichtung bewegt.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine erfindungsgemäße Vorrichtung zum Befüllen von Behältern mit einem Füllprodukt in einer Getränkeabfüllanlage; und
- Figur 2: schematisch eine Schnittansicht eines Details der Transportvorrichtung der Vorrichtung aus Figur 1 mit einem Behälter während des Befüllens durch das Füllventil und einer synchron zu dem Behälter bewegten optischen Bestimmungseinheit.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

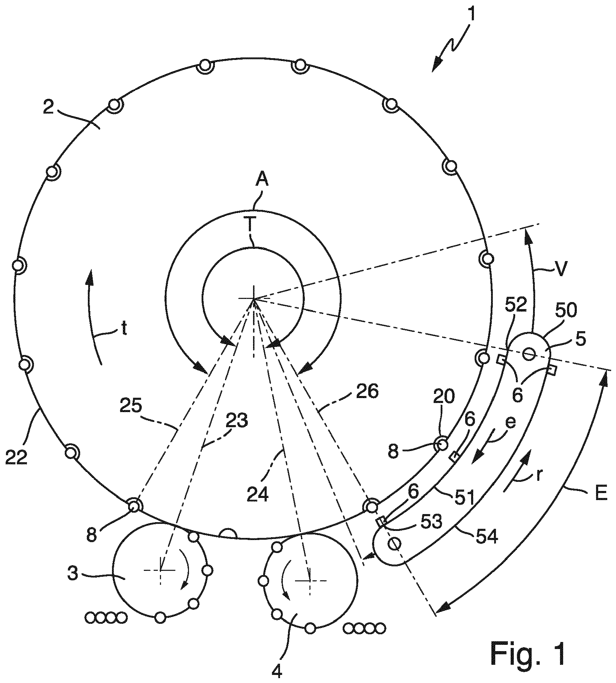

In Figur 1 ist schematisch eine erfindungsgemäße Vorrichtung 1 zum Befüllen von zu befüllenden Behältern mit einem Füllprodukt in einer Getränkeabfüllanlage gezeigt. Zu befüllende Behälter 8 werden über einen Einlaufstern 3 einem Füller 2 in Rundläufer-Bauweise zugeführt und am Anfang 23 einer Transportbahn T an den Füller 2 übergeben. Anschließend werden die Behälter 8 in Transportrichtung t entlang der Transportbahn T durch den Füller 2 transportiert, am Ende 24 der Transportbahn T an einen Auslaufstern 4 übergeben und zur weiteren Verarbeitung ausgeleitet.

Der Anfang 23 der Transportbahn T entspricht bei einem Rundläufer-Füller dem Beginn des Behandlungswinkels des Rundläufers, die Transportbahn T dem Behandlungswinkel und das Ende 24 der Transportbahn T dem Ende des Behandlungswinkels des Rundläufers.

Die Behälter 8 werden in einem sich innerhalb der Transportbahn T befindlichen Abfüllsegment A, welches durch den Füllbeginn 25 und das Füllende 26 definiert ist, mit einem Füllprodukt befüllt. Zum Befüllen der Behälter 8 ist hierfür an der Transportvorrichtung 22 eine Mehrzahl an Füllventilen 20 gleichmäßig um den Umfang der Transportvorrichtung 22 verteilt angeordnet.

Zum Erfassen des Füllstands der Behälter 8 sind in einem Endbereich des Abfüllsegments A optische Bestimmungseinheiten 6 vorgesehen, wobei jeweils eine optische Bestimmungseinheit 6 mit jeweils einem zu befüllenden Behälter in einem Erfassungsbereich E, welcher einem Teilbereich der Transportbahn T entspricht, synchron bewegbar ist. Die optischen Bestimmungseinheiten 6 weisen jeweils eine Kamera auf, welche auf den zu befüllenden Behälter 8, in dem der Füllstand zu erfassen ist, gerichtet ist und den darin vorliegenden Füllstand des Füllprodukts während der Bewegung des zu befüllenden Behälters 8 entlang der Transportbahn T erfasst. Die Bestimmung des Füllstands über die optischen Bestimmungseinheiten 6 dient der Bestimmung des Füllendes für den jeweiligen Behälter. Auf diese Weise kann aus dem Füllstand beziehungsweise der Entwicklung des Füllstands der Zeitpunkt des Schließens des jeweiligen Füllventils 20 hergeleitet werden, der zum Erreichen des gewünschten End-Füllstands des Behälters führt.

Die Herleitung des Zeitpunkts des Schließens des Füllventils 20 kann beispielsweise dadurch erreicht werden, dass ermittelt wird, dass eine bestimmte Füllhöhe erreicht wird und nach Erreichen dieser bestimmten Füllhöhe das Schließen des Füllventils 20 eingeleitet wird. Dabei wird das Nachlaufvolumen des Füllventils 20 berücksichtigt, so dass dann der gewünschte End-Füllstand erreicht wird.

In einer weiteren Ausführungsform kann aus der Bestimmung der Veränderung des Füllstands, also der Geschwindigkeit des Ansteigens des Füllproduktspiegels in dem Behälter während des Füllens, der Zeitpunkt des Schließens des Füllventils 20 hergeleitet werden. Auch dabei wird das Nachlaufvolumen des Füllventils 20 berücksichtigt.

Die optischen Bestimmungseinheiten 6 sind an einer Führungsvorrichtung 5 befestigt, welche beabstandet von der Transportvorrichtung 22 angeordnet ist. Die optischen Bestimmungseinheiten 6 sind dabei entlang einer Bewegungsbahn 50 bewegbar. Um einen konstanten Abstand zwischen den im Erfassungsbereich E transportierten Behältern 8 und den zu diesen jeweils synchron bewegten optischen Bestimmungseinheiten 6 bereitzustellen, ist die Führungsvorrichtung 5 im Wesentlichen nierenförmig ausgebildet. Die Bewegungsbahn 50 der Führungsvorrichtung 5 ist in einen kreisbogenförmigen Arbeitsbereich 51 mit einem Anfang 52 und einem Ende 53 und einem Rückführungsbereich 54, welcher am Ende 53 des Arbeitsbereichs 51 ansetzt und bis zum Anfang 52 des Arbeitsbereichs 51 verläuft, unterteilt.

Im Arbeitsbereich 51 sind die optischen Bestimmungseinheiten 6 synchron zu den Behältern 8 bewegbar, wobei jeweils eine optische Bestimmungseinheit 6 mit der Erfassungsgeschwindigkeit e synchron zu jeweils einem Behälter 8 zum Erfassen des Füllstands des Füllprodukts in diesem Behälter 8 bewegt wird. Im Rückführbereich 54 werden die optischen Bestimmungseinheiten 6 mit der Rückführgeschwindigkeit r bewegt, welche höher ist, als die Erfassungsgeschwindigkeit e, bevorzugt um ein Vielfaches höher. Hierdurch können optische Bestimmungseinheiten 6, welche das Ende 53 des Arbeitsbereichs 51 passiert haben, in kürzerer Zeit, als eine optische Bestimmungseinheit 6 zur Durchquerung des Arbeitsbereichs 51 benötigt, an den Anfang 52 des Arbeitsbereichs 51 rückgeführt werden, so dass diese am Anfang 52 des Arbeitsbereichs 51 zur Erfassung des Füllstands eines weiteren in den Erfassungsbereich E transportieren Behälters 8 bereitsteht. Hierdurch kann die Anzahl der optischen Bestimmungseinheiten 6 reduziert sein im Vergleich zu einer Führungsvorrichtung 5, an welcher die optischen Bestimmungseinheiten 6 mit gleichbleibender Geschwindigkeit, welche der Erfassungsgeschwindigkeit e entspricht, bewegt werden, da bei dieser die optischen Bestimmungseinheiten 6 mit konstanter Teilung beabstandet anzuordnen wären.

Die Bewegungsbahn 50 ist in dieser Ausführungsform durch eine magnetische Schwebeführung vorgegeben. Jeweils eine optische Bestimmungseinheit 6 ist dabei auf jeweils einem Schlitten der Schwebeführung angeordnet. Die Führungsschiene der Schwebeführung ist als Langstator ausgebildet, so dass die die optischen Bestimmungseinheiten 6 aufweisenden Schlitten der Schwebeführung über den Langstator angetrieben werden. Alternativ können aber auch andere Führungsarten für die Bereitstellung der Bewegungsbahn vorgesehen sein, bevorzugt in Form einer riemengetriebenen oder verzahnungsgetriebenen Linearführung, oder in Form eines geführten Riemens, an welchem die optischen Bestimmungseinheiten 6 direkt angebracht sind.

Die optischen Bestimmungseinheiten 6 stehen ferner mit einer nicht gezeigten Steuereinheit zum Steuern und/oder Regeln des Befüllvorgangs der Behälter 8 in Kommunikation, wobei das Beenden des Befüllvorgangs eines Behälters 8 durch die Erfassung eines vorgegebenen Füllstands in dem Behälter 8 mittels der dem Behälter 8 zugeordneten optischen Bestimmungseinheit 6 auslösbar ist. Die optische Bestimmungseinheit 6 signalisiert dabei der Steuereinheit das Erreichen des vorgegebenen Füllstands in dem entsprechenden Behälter 8. Daraufhin gibt die Steuereinheit einen Steuerbefehl zum Beenden des Füllvorgangs an das Füllventil 20 ab, so dass dieses verschlossen wird. Der vorgegebene Füllstand ist dabei so gewählt, dass ein nach dem Schließen des Füllventils 20 aus diesem in den Behälter 8 laufender Nachlauf des Füllprodukts berücksichtigt wird, so dass sich ein vorgegebener End-Füllstand des Füllprodukts in dem Behälter 8 einstellt.

Der Erfassungsbereich E, welcher im Wesentlichen dem Arbeitsbereich 51 entspricht, endet in Transportrichtung t gesehen hinter dem Füllende 26. Hierdurch kann die optische Bestimmungseinheit 6 zusätzlich den End-Füllstand in dem Behälter 8 nach Verschließen des Füllventils 20 erfassen und an die Steuereinheit übermitteln. Basierend darauf kann die Steuereinheit bei einer Abweichung des End-Füllstands von dem vorgegebenen Sollwert des End-Füllstands beziehungsweise von einem vorgegebenen Toleranzbereich, in dessen Grenzen der End-Füllstand von dem Sollwert abweichen kann, einen weiteren Steuerbefehl zum Nachfüllen oder Ausschleusen des fehlerhaft befüllten Behälters 8 an eine entsprechende, nicht gezeigte Einrichtung zum Nachfüllen oder Ausschleusen ausgeben.

Die Führungsvorrichtung 5 ist innerhalb eines Verschiebebereichs V verschiebbar, um die Position des Erfassungsbereichs E respektive des Arbeitsbereichs 51 je nach Art und Größe der zu befüllenden Behälter 8 einzustellen. Dadurch ist es möglich, verschiedene Behälterarten, für welche unterschiedliche Abfüllsegmente A vorzusehen sind, in der Vorrichtung 1 zu befüllen. Bevorzugt wird die Position des Erfassungsbereichs E respektive des Arbeitsbereichs 51 durch Verschieben der Führungsvorrichtung 5 während der Umrüstung der Vorrichtung 1 auf die entsprechende neue Behälterart eingestellt, so dass sich die Führungsvorrichtung 5 während des Befüllbetriebs in einer festen Position befindet.

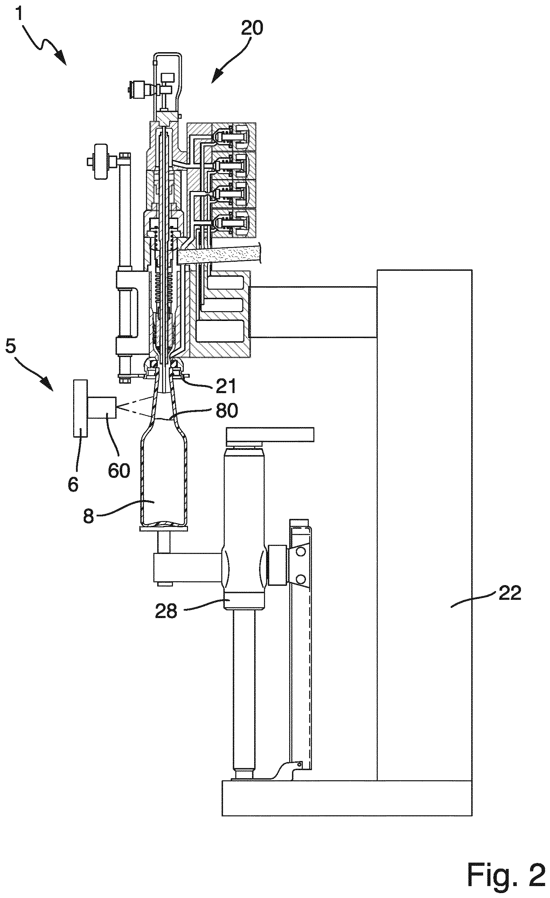

Figur 2 zeigt schematisch eine Schnittansicht eines Details der Transportvorrichtung 22 mit einem Behälter 8 während des Befüllens durch das Füllventil 20 und einer synchron zu dem Behälter 8 bewegten optischen Bestimmungseinheit 6. Eine an der Transportvorrichtung 22 angeordnete Hubvorrichtung 28 presst den Behälter 8 gegen das Füllventil 20. Da die optische Bestimmungseinheit 6 durch die Führungsvorrichtung 5 synchron zu dem Behälter 8 mitbewegt wird, kann diese sehr nahe an dem Behälter 8 angeordnet sein. Die Kamera 60 der optischen Bestimmungseinheit ist in Richtung des Behälters 8 gerichtet und erfasst den darin vorliegenden Füllstand 80.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen. Die Erfindung ist im beigefügten Anspruchssatz definiert.

### Bezugszeichenliste

- 1: Vorrichtung
- 2: Füller
- 20: Füllventil
- 22: Transportvorrichtung
- 23: Anfang der Transportbahn
- 24: Ende der Transportbahn
- 25: Füllbeginn
- 26: Füllende
- 28: Hubvorrichtung
- 3: Einlaufstern
- 4: Auslaufstern
- 5: Führungsvorrichtung
- 50: Bewegungsbahn
- 51: Arbeitsbereich
- 52: Anfang des Arbeitsbereichs
- 53: Ende des Arbeitsbereichs
- 54: Rückführungsbereich
- 6: Bestimmungseinheit
- 60: Kamera
- 8: Behälter
- 80: Füllstand

- A: Abfüllsegment
- E: Erfassungsbereich
- T: Transportbahn
- V: Verschiebebereich

- e: Erfassungsgeschwindigkeit
- r: Rückführungsgeschwindigkeit
- t: Transportrichtung

## Patentansprüche

1. Vorrichtung (1) zum Befüllen eines Behälters (8) mit einem Füllprodukt in einer Getränkeabfüllanlage, wobei eine Transportvorrichtung (22) zum Transportieren eines zu befüllenden Behälters (8) während des Befüllvorgangs vorgesehen ist, wobei die Transportvorrichtung (22) den zu befüllenden Behälter (8) entlang einer Transportbahn (T) transportiert, und wobei mindestens eine Bestimmungseinheit (6) zum Bestimmen des Füllstands (80) des Füllprodukts in dem Behälter (8) vorgesehen ist, wobei
die mindestens eine Bestimmungseinheit(6) in einem Teilabschnitt der Transportbahn (T) des Behälters (8) mit der Transportvorrichtung (22) synchron bewegbar ist, wobei
die mindestens eine Bestimmungseinheit (6) auf einer vorgegebenen, geschlossenen Bewegungsbahn (50) geführt ist, wobei
die Bewegungsbahn (50) zumindest einen Arbeitsbereich (51) aufweist, in welchem die mindestens eine Bestimmungseinheit (6) synchron zum Behälter (8) bewegbar ist, um den Füllstand (80) in dem Behälter (8) zu erfassen, und einen Rückführungsbereich (54) aufweist, in welchem die Bestimmungseinheit (6) zum Anfang (52) des Arbeitsbereichs (51) bewegbar ist,
**dadurch gekennzeichnet, dass**
mindestens eine Bestimmungseinheit (6) in dem Rückführungsbereich (54) mit einer anderen Geschwindigkeit führbar ist und/oder eine andere Beschleunigung erfährt, als im Arbeitsbereich (51).

2. Vorrichtung (1) gemäß Anspruch 1, **dadurch gekennzeichnet, dass** die mindestens eine Bestimmungseinheit (6) eine optische Bestimmungseinheit (6) zur optischen Bestimmung des Füllstands ist, bevorzugt eine Kamera (60), wobei der Füllstand durch die optische Bestimmungseinheit (6) optisch erfasst wird.

3. Vorrichtung (1) gemäß Anspruch 1 oder 2, **dadurch gekennzeichnet, dass** eine Führungsvorrichtung (5) zum Führen der mindestens einen Bestimmungseinheit (6) außerhalb des zu befüllenden Behälters (8) vorgesehen ist.

4. Vorrichtung (1) gemäß Anspruch 3, **dadurch gekennzeichnet, dass** die Führungsvorrichtung (5) an der Transportvorrichtung (22) angeordnet ist.

5. Vorrichtung gemäß Anspruch 3, **dadurch gekennzeichnet, dass** die Führungsvorrichtung (5) von der Transportvorrichtung (22) beabstandet angeordnet ist.

6. Vorrichtung (1) gemäß einem der Ansprüche 3 bis 5, **dadurch gekennzeichnet, dass** die Führungsvorrichtung (5) zumindest entlang eines Teilsektors des Abfüllsegments (A), in welchem der zu befüllende Behälter (8) mit dem Füllprodukt befüllt wird, angeordnet ist, wobei der Teilsektor bevorzugt zumindest einen Endsektor des Abfüllsegments A umfasst.

7. Vorrichtung (1) gemäß einem der vorstehenden Ansprüche, **dadurch gekennzeichnet, dass** die mindestens eine Bestimmungseinheit (6) mit einer Steuereinheit zum Steuern und/oder Regeln des Befüllvorgangs des Behälters (8) in Kommunikation steht, wobei das Beenden des Befüllvorgangs durch die Erfassung eines vorgegebenen Füllstands (80) und/oder der Entwicklung des Füllstands (80) im Behälter (8) mittels der Bestimmungseinheit (6) ermittelbar ist.

8. Vorrichtung (1) gemäß einem der Ansprüche 3 bis 6, **dadurch gekennzeichnet, dass** die Führungsvorrichtung (5) eine Linearführung und/oder einen Förderriemen und/oder eine magnetische Schwebeführung und/oder einen Langstator aufweist.

9. Vorrichtung (1) gemäß einem der vorstehenden Ansprüche, **dadurch gekennzeichnet, dass** mindestens ein mit der Transportvorrichtung (22) bewegtes Füllventil (20) zum Befüllen eines Behälters (8) vorgesehen ist, wobei das Füllventil (20) aufgrund eines Steuerbefehls verschließbar ist, wobei der Steuerbefehl durch die Erfassung des vorgegebenen Füllstands (80) im Behälter (8) mittels der mindestens einen Bestimmungseinheit (6) auslösbar ist.

10. Verfahren zum Befüllen von Behältern (8) mit einem Füllprodukt, bevorzugt zum Befüllen von Flaschen in einer Getränkeabfüllanlage, umfassend die Schritte des Transportierens eines zu befüllenden Behälters (8) mit einer Transportvorrichtung (22) und des Befüllens des mittels der Transportvorrichtung (22) bewegten Behälters (8) während des Transports, wobei
die mindestens eine Bestimmungseinheit (6) mit dem mittels der Transportvorrichtung (22) bewegten Behälter (8) in einem Teilabschnitt der Transportbahn (T) synchron bewegt wird,
die synchron zu dem Behälter (8) bewegte Bestimmungseinheit (6) den Füllstand (80) des Füllprodukts in dem Behälter (8) erfasst, und
die mindestens eine Bestimmungseinheit (6) auf einer vorgegebenen, geschlossenen Bewegungsbahn (50) geführt wird, wobei
die Bewegungsbahn (50) zumindest einen Arbeitsbereich (51) aufweist, in welchem die mindestens eine Bestimmungseinheit (6) synchron zum Behälter (8) bewegt wird, um den Füllstand (80) in dem Behälter (8) zu erfassen, und einen Rückführungsbereich (54) aufweist, in welchem die Bestimmungseinheit (6) zum Anfang (52) des Arbeitsbereichs (51) bewegt wird,
**dadurch gekennzeichnet, dass**
mindestens eine Bestimmungseinheit (6) in dem Rückführungsbereich (54) mit einer anderen Geschwindigkeit geführt wird und/oder eine andere Beschleunigung erfährt, als im Arbeitsbereich (51).

11. Verfahren gemäß Anspruch 10, **dadurch gekennzeichnet, dass** der Befüllvorgang des Behälters (8) beendet wird, wenn aus dem mittels der Bestimmungseinheit (6) ermittelten Füllstand (80) und/oder der Entwicklung des Füllstands (80) das Vorliegen eines Füllendes ermittelt wird.

12. Verfahren gemäß Anspruch 10 oder 11, **dadurch gekennzeichnet, dass** die mindestens eine Bestimmungseinheit (6) zumindest über einen Teilsektor des Abfüllsegments (A), in welchem der zu befüllende Behälter (8) mit dem Füllprodukt befüllt wird, bewegt wird, bevorzugt zumindest über einen Endsektor des Abfüllsegments (A).

## Claims

1. Device (1) for filling a container (8) with a filling product in a beverage filling plant, wherein a transporting device (22) for transporting a container (8) to be filled during the filling process is provided, wherein the transporting device (22) transports the container (8) to be filled along a transporting path (T), and wherein at least one determining unit (6) for determining the fill level (80) of the filling product in the container (8) is provided, wherein
the at least one determining unit (6) can be displaced synchronously with the transporting device (22) in a sub-section of the transporting path (T) of the container (8), wherein
the at least one determining unit (6) is guided on a prescribed, closed motion path (50), wherein
the motion path (50) has at least one working region (51), in which the at least one determining unit (6) can be displaced synchronously with the container (8) in order to detect the fill level (80) in the container (8), and has a return region (54), in which the determining unit (6) can be displaced to the start (52) of the working region (51),
**characterized in that**
at least one determining unit (6) can be displaced at a different speed in the return region (54) and/or experiences a different acceleration than in the working region(51).

2. Device (1) according to claim 1, **characterized in that** the at least one determining unit (6) is an optical determining unit (6) for optical determination of the fill level, preferably a camera (60), wherein the fill level is detected optically by the optical determining unit (6).

3. Device (1) according to claim 1 or 2, **characterized in that** a guiding device (5) is provided for guiding the at least one determining unit (6) outside the container (8) to be filled.

4. Device (1) according to claim 3, **characterized in that** the guiding device (5) is disposed on the transporting device (22).

5. Device (1) according to claim 3, **characterized in that** the guiding device (5) is disposed at a distance from the transporting device (22).

6. Device (1) according to one of claims 3 to 5, **characterized in that** the guiding device (5) is disposed at least along a sub-sector of the filling segment (A) in which the container (8) to be filled is filled with the filling product, wherein the sub-sector preferably comprises at least one end sector of the filling segment (A).

7. Device (1) according to one of the previous claims, **characterized in that** at least one determining unit (6) is in communication with a control unit for controlling and/or regulating the process of filling the container (8), wherein the ending of the filling process can be determined by means of the determining unit (6) by detecting a predetermined fill level (80) and/or the progress of the fill level (80) in the container (8).

8. Device (1) according to one of claims 3 to 6, **characterized in that** the guiding device (5) has a linear guide and/or a carrier belt and/or a magnetic levitation guide and/or a long stator.

9. Device (1) according to one of the previous claims, **characterized in that** at least one filling valve (20), displaced with the transporting device (22), for filling a container (8) is provided, wherein the filling valve (20) can be closed as a consequence of a control command, wherein the control command can be initiated by detecting, by means of the at least one determining unit (6), the predetermined fill level (80) in the container (8).

10. Method for filling containers (8) with a filling product, preferably for filling bottles in a beverage filling plant, comprising the steps of transporting with a transporting device (22) a container (8) to be filled, and filling the container (8) displaced by the transporting device (22) during its transport, wherein
the at least one determining unit (6) is displaced in a sub-section of the transporting path (T) synchronously with the container (8) that is displaced by means of the transporting device (22), the determining unit (6) that is displaced synchronously with the container (8) detects the fill level (80) of the filling product in the container (8), and
the at least one determining unit (6) is guided on a prescribed, closed motion path (50), wherein
the motion path (50) has at least one working region (51), in which the at least one determining unit (6) is displaced synchronously with the container (8) in order to detect the fill level (80) in the container (8), and has a return region (54) in which the determining unit (6) can be displaced to the start (52) of the working region (51),
**characterized in that**
at least one determining unit (6) is guided in the return region (54) at a different speed, and/or undergoes a different acceleration than in the working region (51).

11. Method according to claim 10, **characterized in that** the filling process of the container (8) is ended when it is determined, from the fill level (80) and/or the progress in the fill level (80), detected by means of the determining unit (6), that an end of filling condition exists.

12. Method according to claim 10 or 11, **characterized in that** the at least one determining unit (6) is displaced at least over a sub-sector of the filling segment (A) in which the container (8) to be filled is filled with the filling product, preferably at least over an end sector of the filling segment (A).

## Revendications

1. Dispositif (1) permettant de remplir un récipient (8) avec un produit de remplissage dans une installation d'embouteillage de boissons, dans lequel il est prévu un dispositif de transport (22) permettant de transporter un récipient (8) à remplir pendant l'opération de remplissage, dans lequel le dispositif de transport (22) transporte le récipient (8) à remplir le long d'un trajet de transport (T), et dans lequel il est prévu au moins une unité de détermination (6) permettant de déterminer le niveau de remplissage (80) du produit de remplissage dans le récipient (8), dans lequel
l'au moins une unité de détermination (6) peut être déplacée de manière synchrone avec le dispositif de transport (22) dans une section partielle du trajet de transport (T) du récipient (8), dans lequel
l'au moins une unité de détermination (6) est guidée sur un trajet de déplacement (50) fermé prédéfini, dans lequel
le trajet de déplacement (50) comprend au moins une zone de travail (51) dans laquelle l'au moins une unité de détermination (6) peut être déplacée de manière synchrone avec le récipient (8) pour détecter le niveau de remplissage (80) dans le récipient (8), et une zone de renvoi (54) dans laquelle l'unité de détermination (6) peut être déplacée vers le début (52) de la zone de travail (51),
**caractérisé en ce que**
au moins une unité de détermination (6) peut être guidée dans la zone de renvoi (54) à une vitesse différente et/ou subit une accélération différente de celle dans la zone de travail (51).

2. Dispositif (1) selon la revendication 1, **caractérisé en ce que** l'au moins une unité de détermination (6) est une unité de détermination optique (6) permettant de déterminer optiquement le niveau de remplissage, de préférence une caméra (60), dans lequel le niveau de remplissage est détecté optiquement par l'unité de détermination optique (6).

3. Dispositif (1) selon la revendication 1 ou 2, **caractérisé en ce qu'**un dispositif de guidage (5) est prévu pour guider l'au moins une unité de détermination (6) à l'extérieur du récipient (8) à remplir.

4. Dispositif (1) selon la revendication 3, **caractérisé en ce que** le dispositif de guidage (5) est disposé sur le dispositif de transport (22).

5. Dispositif selon la revendication 3, **caractérisé en ce que** le dispositif de guidage (5) est disposé à une certaine distance du dispositif de transport (22).

6. Dispositif (1) selon l'une des revendications 3 à 5, **caractérisé en ce que** le dispositif de guidage (5) est disposé au moins le long d'un secteur partiel du segment de remplissage (A) dans lequel le récipient (8) à remplir est rempli avec le produit de remplissage, dans lequel le secteur partiel comprend de préférence au moins un secteur de fin du segment de remplissage (A).

7. Dispositif (1) selon l'une des revendications précédentes, **caractérisé en ce que** l'au moins une unité de détermination (6) est en communication avec une unité de commande permettant de commander et/ou de réguler l'opération de remplissage du récipient (8), dans lequel la fin de l'opération de remplissage peut être déterminée par la détection d'un niveau de remplissage (80) prédéfini et/ou l'évolution du niveau de remplissage (80) dans le récipient (8) au moyen de l'unité de détermination (6).

8. Dispositif (1) selon l'une des revendications 3 à 6, **caractérisé en ce que** le dispositif de guidage (5) présente un guide linéaire et/ou une courroie de transport et/ou un guide flottant magnétique et/ou un stator long.

9. Dispositif (1) selon l'une des revendications précédentes, **caractérisé en ce qu'**il est prévu au moins une vanne de remplissage (20) déplacée avec le dispositif de transport (22), laquelle vanne permet de remplir un récipient (8), dans lequel la vanne de remplissage (20) peut être fermée en réponse à une instruction de commande, dans lequel l'instruction de commande peut être déclenchée par la détection du niveau de remplissage (80) prédéfini dans le récipient (8) au moyen de l'au moins une unité de détermination (6).

10. Procédé permettant de remplir des récipients (8) avec un produit de remplissage, permettant de préférence de remplir des bouteilles dans une installation d'embouteillage de boissons, comprenant les étapes de transport d'un récipient (8) à remplir à l'aide d'un dispositif de transport (22) et de remplissage du récipient (8) déplacé au moyen du dispositif de transport (22) pendant le transport, dans lequel
l'au moins une unité de détermination (6) est déplacée de manière synchrone avec le récipient (8) déplacé au moyen du dispositif de transport (22) dans une section partielle du trajet de transport (T), l'unité de détermination (6) déplacée de manière synchrone avec le récipient (8) détecte le niveau de remplissage (80) du produit de remplissage dans le récipient (8), et
l'au moins une unité de détermination (6) est guidée sur un trajet de déplacement (50) fermé prédéfini, dans lequel
le trajet de déplacement (50) présente au moins une zone de travail (51) dans laquelle l'au moins une unité de détermination (6) est déplacée de manière synchrone avec le récipient (8) pour détecter le niveau de remplissage (80) dans le récipient (8), et présente une zone de renvoi (54) dans laquelle l'unité de détermination (6) est déplacée vers le début (52) de la zone de travail (51),
**caractérisé en ce que**
au moins une unité de détermination (6) est guidée dans la zone de renvoi (54) à une vitesse différente et/ou subit une accélération différente de celle dans la zone de travail (51).

11. Procédé selon la revendication 10, **caractérisé en ce que** l'opération de remplissage du récipient (8) est terminée lorsque la présence d'une fin de remplissage est déterminée à partir du niveau de remplissage (80) déterminé au moyen de l'unité de détermination (6) et/ou de l'évolution du niveau de remplissage (80).

12. Procédé selon la revendication 10 ou 11, **caractérisé en ce que** l'au moins une unité de détermination (6) est déplacée au moins sur un secteur partiel du segment de remplissage (A) dans lequel le récipient (8) à remplir est rempli avec le produit de remplissage, de préférence au moins sur un secteur de fin du segment de remplissage (A).
